# FASCICULE DE BREVET EUROPEEN

(11) **EP 3 307 121 B1**
(45) Date de publication et mention de la délivrance du brevet: **19.01.2022**
(21) Numéro de dépôt: 16741070.3
(22) Date de dépôt: 10.06.2016
(51) Int. Cl.: A47J 37/06

(54) **PLAN DE CUISSON À INERTIE**
TRÄGHEITSKOCHFELD
INERTIAL COOKTOP

(30) Priorité: 12.06.2015 FR 1555371
(43) Date de publication de la demande: 18.04.2018
(73) Titulaire: Sisteria, 82000 Montauban (FR)
(72) Inventeur: LAMPAERT, Rémy, 31480 Brignemont (FR)
(74) Mandataire: Ipside
(86) Numéro de dépôt international: PCT/FR2016/051406
(87) Numéro de publication internationale: WO 2016/198802

(56) Documents cités:
- EP-A1- 0 970 648
- EP-A1- 1 946 685
- DE-U1- 9 308 029
- FR-A- 876 659
- US-A1- 2006 107 842
- TOMASZ WRÓBEL: "Characterization of Bimetallic Castings with an Austenitic Working Surface Layer and an Unalloyed Cast Steel Base", JOURNAL OF MATERIALS ENGINEERING AND PERFORMANCE., vol. 23, no. 5, 25 March 2014 (2014-03-25) , pages 1711-1717, XP055464821, US ISSN: 1059-9495, DOI: 10.1007/s11665-014-0953-4

## Description

### DOMAINE TECHNIQUE

La présente invention relève du domaine des dispositifs de cuisson d'aliments.

Elle concerne plus particulièrement un dispositif de type planche de cuisson à grande inertie thermique, notamment du type connu usuellement sous le nom de « plancha ». L'invention vise également un procédé de fabrication d'une telle planche de cuisson.

### ÉTAT DE LA TECHNIQUE

La cuisson des aliments sur un plan dotée d'une forte inertie thermique est connue depuis de nombreuses années. Elle permet de cuire des aliments, par exemple de la viande, avec une grande constance de chaleur appliquée, ainsi qu'une température uniforme sur toute le plan de cuisson, et donc, sur tout l'aliment en cours de cuisson. De tels dispositifs sont, par exemple, connus sous le nom de plancha dans le cas d'utilisation individuelle, mais ils sont également utilisés en cuisine industrielle ou en restauration.

Actuellement, il existe déjà plusieurs types de plans de cuisson à inertie thermique.

Un premier type de plan de cuisson est réalisé en fonte émaillée. La fonte grise (alliage de fer + 2 à 6,67 % de carbone) seule présente en effet une surface non lisse qui vient s'accrocher sur les aliments, empêchant ceux-ci d'être détachés facilement de la surface de la planche de cuisson. Le revêtement en fonte émaillée répond à ce problème et présente une excellente homogénéité thermique sur la surface de cuisson et permet un entretien facile de la surface. Celle-ci reste néanmoins fragile. En effet, le revêtement peut s'écailler avec le temps, faisant perdre la facilité d'entretien au produit et sa fonction alimentaire. La fonte peut, par ailleurs, se casser sous l'effet d'un choc thermique. En ce qui concerne la fonte elle-même, elle a tendance à se déformer au cours du temps, formant ainsi une surface non plane gênant la cuisson (zones retenant les graisses notamment).

Un second type de plan de cuisson est réalisé en inox alimentaire. Ce revêtement présente une surface de cuisson très résistante et très simple d'entretien, mais présente par contre une mauvaise homogénéité sur le plan thermique. L'inox est en effet mauvais conducteur de la chaleur, et un tel plan de cuisson nécessite alors un grand nombre de brûleurs pour compenser ce phénomène. La consommation d'énergie est alors nettement augmentée. Enfin, l'inertie thermique de l'inox alimentaire est faible et la plaque de cuisson redevient froide rapidement après arrêt de son chauffage par les brûleurs.

Un troisième type de plan de cuisson est réalisé en acier alimentaire (alliage de fer et d'un peu de carbone). Ce matériau offre l'avantage de bien conduire la chaleur et d'être incassable et résistant aux risques de rayures. Par contre, son défaut principal est qu'il rouille avec le temps et nécessite donc un entretien régulier pour contrer ce phénomène. De même, l'inertie et la conduction thermique de ce matériau restent nettement moins bonnes que celles de la fonte.

D'autres types de plaque sont également connus, par exemple en Chrome dur (cher et toxique à haute température) etc.

Le document EP-A-1946685 décrit un dispositif de cuisson selon le préambule de la revendication indépendante 1.

Comme on le voit, chacun de ces dispositifs présente divers problèmes spécifiques qui freinent la généralisation de l'utilisation de planches de cuisson.

### EXPOSÉ DE L'INVENTION

La présente invention a pour objectif de proposer un nouveau dispositif de planche de cuisson à grande inertie thermique, permettant de résoudre une partie des problèmes cités plus haut, et notamment de fournir une grande résistance à la surface de cuisson.

Elle vise à cet effet sous un premier aspect un dispositif de cuisson d'aliment, du type comportant une planche à grande inertie thermique et des moyens de chauffage de ladite planche par sa surface inférieure, ladite planche comprenant au moins deux plaques de matériaux différents superposées, maintenues en contact étroit sur une partie de leur surfaces placées en vis à vis.

On comprend que, de la sorte, selon un choix de matériaux judicieux, le dispositif exposé permet de fournir une planche de cuisson qui nécessite peu d'entretien.

De même, dans le cas d'un choix de matériaux tels que la plaque supérieure, adaptée à recevoir les aliments à cuire, soit réalisée en inox ou en titane, tandis que la plaque inférieure est réalisée en fonte, la planche de cuisson conserve ici les qualités d'inertie thermique et de conduction de la fonte, tout en assurant la résistance de surface de l'inox alimentaire ou du titane.

Dans un mode de réalisation, l'épaisseur de la plaque supérieure est nettement inférieure à l'épaisseur de la plaque inférieure, typiquement comprise entre deux et dix fois inférieure.

Plus particulièrement, dans ce cas, l'épaisseur de la plaque supérieure est de un à cinq millimètres, alors que l'épaisseur de la plaque inférieure est de 0.5 à deux centimètres.

Dans un mode de réalisation, la plaque inférieure est composée de plusieurs éléments disposés côte à côte. Alternativement, la plaque inférieure est réalisée de façon monobloc.

Dans ce cas, les éléments sont par exemple configurés sous forme de groupes de losanges dont les faces ne sont pas parallèles aux bords extérieurs de la plaque supérieure.

Dans un mode de réalisation avantageux, les deux plaques sont maintenues en contact étroit l'une contre l'autre par collage à chaud, sans apport de matière extérieure.

La présente divulgation aussi un procédé de fabrication de planche comportant deux plaques de matériaux différents, plaqués intimement sur leur surface sans apport de matériau extérieur.

La présente divulgation vise notamment un procédé de fabrication d'une planche composée de deux plaques métalliques de matériaux différents collés ensemble en fonderie. Ce procédé est, comme on le comprend, directement applicable au cas de la fabrication d'une planche de cuisson à inertie thermique.

Le procédé de collage à chaud d'une plaque en fonte et d'une plaque en inox ou en titane, comprend des étapes suivantes :
- dans une première étape, la plaque en fonte est réalisée aux dimensions prédéterminées,
- dans une deuxième étape, la plaque en fonte est intégrée froide dans un moule de fonderie,
- dans une troisième étape, de l'inox en fusion ou du titane en fusion est ajouté dans ce moule pour réaliser respectivement la plaque en inox ou en titane.

Alternativement, il comprend des étapes suivantes :
- dans une première étape, la plaque en inox ou en titane est réalisée aux dimensions prédéterminées,
- dans une deuxième étape, la plaque en inox ou en titane est intégrée froide dans un moule de fonderie,
- dans une troisième étape, de la fonte en fusion est ajoutée dans ce moule pour réaliser la plaque en fonte.

### PRÉSENTATION DES FIGURES

Les caractéristiques et avantages de l'invention seront mieux appréciés grâce à la description qui suit, description qui expose les caractéristiques de l'invention au travers d'un exemple non limitatif d'application.

La description s'appuie sur les figures annexées qui représentent :
- Figure 1 : une vue de côté d'une planche de cuisson dans un mode de réalisation de l'invention,
- Figure 2 : une vue de dessous d'une telle planche, dans un mode particulier de réalisation,
- Figure 3 : un organigramme des étapes d'un procédé de fabrication d'une planche formée de deux matériaux collés selon leur surface en vis à vis,

### DESCRIPTION DÉTAILLÉE D'UN MODE DE RÉALISATION DE L'INVENTION

L'invention trouve sa place dans le cadre d'un dispositif de cuisson utilisant un plan de cuisson à inertie thermique. Seul nous intéresse ici le plan de cuisson lui-même. Les brûleurs et autres éléments du dispositif de chauffage sont supposés connus en soi. Ils sortent en tant que tel du cadre de la présente invention, et ne sont donc pas détaillés plus avant ici.

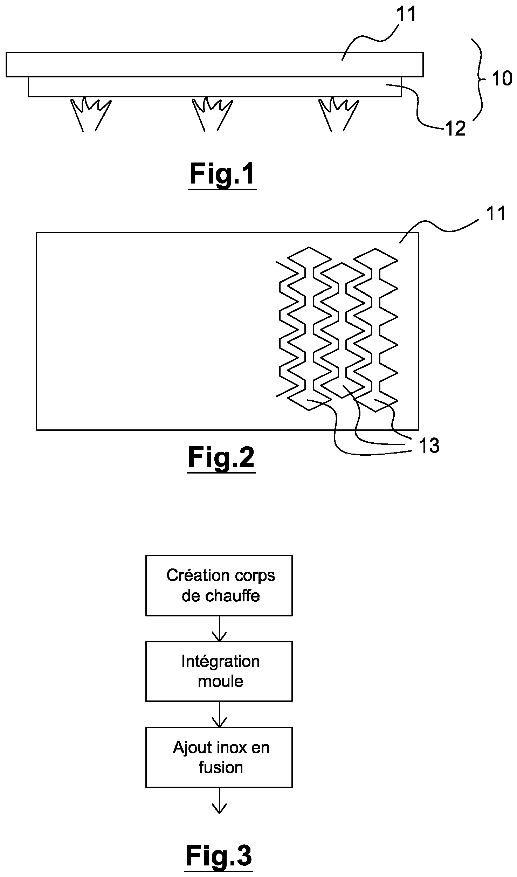

Comme on le voit sur la figure 1, qui illustre un tel dispositif de cuisson en vue de côté, le plan de cuisson 10 comprend deux plaques superposées 11, 12.

La plaque supérieure 11 est la surface de cuisson proprement dite. Elle est destinée à recevoir les aliments à cuire avec lesquels elle vient donc en contact. La plaque supérieure est ici de forme rectangulaire, mais toute autre forme liée aux conditions d'utilisation peut être réalisable. Elle est ici réalisée en inox alimentaire de type connu en soi. On nomme inox alimentaire un alliage de type acier inoxydable, par exemple de type Fer + Chrome (au moins 13%) + Nickel + Carbone, avec des proportions de ces matériaux adaptés à éviter tout phénomène de rouille au cours du temps. Le type d'inox alimentaire envisagé ici est celui désigné sous la référence américaine 304 L. D'autres alliages de caractéristiques équivalentes (notamment résistance aux variations de température) sont cependant envisageables. La plaque supérieure 11 peut également être réalisée en titane. Le titane rend avantageusement la plaque supérieure 11 résistante à la corrosion, à l'érosion, au feu, et notamment aux variations de températures.

Dans le présent exemple nullement limitatif de réalisation, son épaisseur est de un millimètre.

La plaque inférieure 12 constitue le corps de chauffe. Elle est ici réalisée en fonte. Alternativement, elle peut être réalisée en acier, par exemple en acier Martin, ou tout autre matériau présentant de bonnes qualités de conduction thermique.

Dans le présent exemple nullement limitatif de réalisation, son épaisseur est de cinq millimètres. Cette épaisseur est dictée par les qualités d'inertie thermique souhaitées pour le plan de cuisson.

La figure 2 illustre une vue de dessous de la planche de cuisson. Comme on le voit sur cette figure, la plaque inférieure 12, réalisée en fonte, est en fait composée de plusieurs éléments 13 disposés côte à côte, de manière à éviter le problème de dilatation différentielle pouvant amener à une rupture de la plaque en fonte. Ces éléments sont ici configurés sous forme de groupes de losanges, dont les faces ne sont pas parallèles aux bords extérieurs de la plaque supérieure 11. Un espace de un à quelques millimètres est ménagé entre les éléments 13.

Dans le mode de réalisation donné ici à titre non limitatif, les deux plaques 11, 12 sont maintenues en contact étroit l'une contre l'autre par collage à chaud, sans apport de matière extérieure.

Le procédé de collage à chaud comprend une série d'étapes détaillées figure 3.

Dans une première étape, la plaque en inox ou en titane est réalisée, de façon classique. Puis cette plaque subit un dérochage par abrasif de la surface à coller.

Un dégraissage de la surface à coller est ensuite réalisé avec un solvant, par exemple de type Methyl Ethyl Cétone.

La plaque en inox ou en titane est ensuite insérée dans un moule.

Une coulée de fonte est ensuite réalisée sur cette plaque, suivie d'un lent refroidissement sans choc thermique.

Dans une méthode alternative de réalisation, le corps de chauffe, c'est à dire la plaque inférieure 12 en fonte, est réalisé aux dimensions par méthode traditionnelle.

Puis, dans une deuxième étape, la plaque inférieure 12 est intégrée froide dans un moule de fonderie.

Dans une troisième étape, de l'inox en fusion ou du titane en fusion est ajouté dans ce moule.

Dans une variante de réalisation, les plaques, supérieure 11 et inférieure 12 sont maintenues en contact étroit par boulonnage, vissage ou rivetage de la plaque inférieure 12 sous la plaque supérieure 11. Dans ce cas, les boulons, vis ou rivets présentent une densité suffisante pour maintenir une pression suffisante entre les deux plaques. Typiquement, ces points de plaquage sont espacés au maximum de dix centimètres les uns des autres.

Dans une autre variante de réalisation, les plaques, inférieure 12 et supérieure 11, sont assemblées par soudure, que ce soit par méthode TIG, points, roulette ou autre.

### AVANTAGES

Pour disposer de toutes les qualités d'une cuisson a la plancha (surface de cuisson homogène à plus de 300° C), le problème principal est celui de la montée en température et du maintien de cette température lorsqu'on pose des aliments froids sur la planche de cuisson. Le dispositif tel que décrit ci-dessus répond à ces problèmes.

Il combine, d'une part, la résistance et la facilité d'entretien de l'acier inoxydable ou du titane et, d'autre part, la conduction et l'inertie thermique de la fonte tout en évitant les questions de déformation propres à la fonte seule. Il est sans risque pour la santé.

## Revendications

1. Dispositif de cuisson d'aliment, du type comportant une planche à grande inertie thermique et des moyens de chauffage de ladite planche par sa surface inférieure, la planche (10) comprenant au moins deux plaques (11, 12) de matériaux différents superposées, maintenues en contact étroit sur une partie de leur surfaces placées en vis à vis **caractérisé en ce que** la plaque supérieure (11), adaptée à recevoir les aliments à cuire, est réalisée en inox ou en titane, tandis que la plaque inférieure (12) est réalisée en fonte.

2. Dispositif selon la revendication 1, **caractérisé en ce que** l'épaisseur de la plaque supérieure (11) est nettement inférieure à l'épaisseur de la plaque inférieure (12), typiquement comprise entre deux et dix fois inférieure.

3. Dispositif selon la revendication 2, **caractérisé en ce que** l'épaisseur de la plaque supérieure (11) est de un à cinq millimètres, alors que l'épaisseur de la plaque inférieure (12) est de 0.5 à deux centimètres.

4. Dispositif selon l'une quelconque des revendications 1 à 3, **caractérisé en ce que** la plaque inférieure (12) est composée de plusieurs éléments (13) disposés côte à côte.

5. Dispositif selon la revendication 4, **caractérisé en ce que** les éléments (13) sont configurés sous forme de groupes de losanges dont les faces ne sont pas parallèles aux bords extérieurs de la plaque supérieure (11).

6. Dispositif selon l'une quelconque des revendications 1 à 3, **caractérisé en ce que** les deux plaques (11, 12) sont maintenues en contact étroit l'une contre l'autre par collage à chaud, sans apport de matière extérieure.

## Patentansprüche

1. Vorrichtung zum Kochen von Nahrungsmitteln, in der Art, die eine Plancha mit großer Wärmeträgheit und Mittel zum Erwärmen der Plancha über ihre untere Oberfläche beinhaltet, wobei die Plancha (10) mindestens zwei überlagerte Platten (11, 12) aus unterschiedlichen Materialien umfasst, die an einem Teil ihrer Oberflächen, die einander gegenüber platziert sind, in engem Kontakt gehalten werden, **dadurch gekennzeichnet, dass** die obere Platte (11), die angepasst ist, um die zu kochenden Nahrungsmittel aufzunehmen, aus nichtrostendem Stahl oder aus Titan gefertigt ist, während die untere Platte (12) aus Gusseisen gefertigt ist.

2. Vorrichtung nach Anspruch 1, **dadurch gekennzeichnet, dass** die Dicke der oberen Platte (11) wesentlich geringer ist, als die Dicke der unteren Platte (12), typischerweise zwischen zwei und zehn Mal geringer.

3. Vorrichtung nach Anspruch 2, **dadurch gekennzeichnet, dass** die Dicke der oberen Platte (11) von ein bis fünf Millimeter beträgt, während die Dicke der unteren Platte (12) von 0,5 bis zwei Zentimeter beträgt.

4. Vorrichtung nach einem der Ansprüche 1 bis 3, **dadurch gekennzeichnet, dass** die untere Platte (12) aus mehreren Elementen (13) zusammengesetzt ist, die Seite an Seite angeordnet sind.

5. Vorrichtung nach Anspruch 4, **dadurch gekennzeichnet, dass** die Elemente (13) in Form von Rauten-Gruppen konfiguriert sind, deren Seiten an den äußeren Rändern der oberen Platte (11) nicht parallel sind.

6. Vorrichtung nach einem der Ansprüche 1 bis 3, **dadurch gekennzeichnet, dass** die beiden Platten (11, 12) durch Heißverkleben, ohne Zusatz von externem Material, in engem Kontakt aneinandergehalten werden.

## Claims

1. A food cooking device, of the type with a high-thermal inertia griddle and means for heating said griddle by its bottom surface, the griddle (10) comprising at least two stacked plates (11, 12) of different materials, which plates are kept in close contact on part of the surfaces thereof which are placed opposite one another, **characterized in that** the top plate (11), suitable for receiving the food to be cooked, is made of stainless steel or of titanium, while the bottom plate (12) is made of cast iron.

2. The device as claimed in claim 1, **characterized in that** the thickness of the top plate (11) is clearly less than the thickness of the bottom plate (12), typically between two and ten times less.

3. The device as claimed in claim 2, **characterized in that** the thickness of the top plate (11) is from one to five millimeters, while the thickness of the bottom plate (12) is from 0.5 to two centimeters.

4. The device as claimed in any one of claims 1-3, **characterized in that** the bottom plate (12) is composed of several elements (13) arranged side by side.

5. The device as claimed in claim 4, **characterized in that** the elements (13) are configured as groups of lozenges, the faces of which are not parallel to the outer edges of the top plate (11).

6. The device as claimed in any one of claims 1-3, **characterized in that** the two plates (11, 12) are kept in close contact against each other by hot-bonding, without using external material.
